# EUROPEAN PATENT APPLICATION

(11) **EP 4 579 870 A1**
(43) Date of publication of application: **02.07.2025**
(21) Application number: 24200795.3
(22) Date of filing: 17.09.2024
(51) Int. Cl.: H01M 10/42, H01M 50/204, H01M 50/51, H01M 50/583, H01M 50/296

(54) **BATTERY PACK AND ELECTRIC APPARATUS**

(30) Priority: 29.12.2023 CN 202311865390
(71) Applicant: Xiaomi EV Technology Co., Ltd., 100176 Beijing (CN)
(72) Inventor: LI, Chao, Beijing, 100176 (CN)
(74) Representative: Stöckeler, Ferdinand

(57) **Abstract**

A battery pack includes a battery pack case, a switch device (10), and a plurality of battery cell units. The plurality of battery cell units are arranged in the battery pack case, a positive electrode of each of the battery cell units is configured to be electrically connected to a positive terminal of the power distribution unit, and a negative electrode of each of the battery cell units is configured to be electrically connected to a negative terminal of the power distribution unit. In addition, the plurality of battery cell units are sequentially arranged in a series circuit of the battery pack, and two ends of the series circuit are respectively connected to the positive terminal and the negative terminal of the power distribution unit. The switch device (10) is arranged in the series circuit for connecting or disconnecting the series circuit.

## Description

### FIELD

The present invention relates to the field of batteries, and more particularly to a battery pack and an electric apparatus.

### BACKGROUND

Battery packs are a device used to provide energy to electric apparatuses (such as vehicles) and are key parts of the electric apparatuses. Typically, electric apparatuses are designed to be charged on single charging platforms with a specific charging voltage, such as charging platforms with 400V (voltage) or 800V (voltage).

### SUMMARY

The purpose of the present invention is to provide a battery pack and an electric apparatus to at least partially solve the technical problems existing in the related art.

The invention is set out in the appended set of claims.

In order to achieve the above purpose, according to a first aspect of the present invention, a battery pack is provided, which includes a battery pack case, a switch device, and a plurality of battery cell units. The plurality of battery cell units are arranged in the battery pack case. A positive electrode of each of the battery cell units is configured to be electrically connected with a positive terminal of a power distribution unit, and a negative electrode of each of the battery cell units is configured to be electrically connected with a negative terminal of the power distribution unit. The plurality of battery cell units are sequentially arranged in a series circuit of the battery pack, and two ends of the series circuit are connected to the positive terminal and the negative terminal of the power distribution unit, respectively. The switch device is arranged in the series circuit for connecting or disconnecting the series circuit, to connect the plurality of battery cell units in series to the series circuit or disconnect a series connection between the plurality of battery cell units.

Optionally, the battery pack further includes the power distribution unit.

Optionally, the battery pack further includes a fuse arranged in the series circuit.

Optionally, the switch device is a relay.

Optionally, the battery pack further includes at least one insulating member arranged between adjacent battery cell units.

Optionally, a number of battery cell units is an even number.

Optionally, the positive electrode and the negative electrode of the battery cell unit in the plurality of battery cell units are located on the same side of the battery pack.

Optionally, the plurality of battery cell units are arranged along a width direction of the battery pack, and each of the battery cell units includes at least one battery cell group; a battery cell in each of the battery cell groups is extended and arranged along a length direction of the battery pack; and the positive electrode and the negative electrode of each of the battery cell units are located on the same side of the battery pack in the length direction.

Optionally, each battery cell group includes a plurality of rows of battery cells arranged along the length direction of the battery pack, each row of battery cells includes a plurality of battery cells arranged along the width direction of the battery pack; and in the same battery cell group, the battery cells in each row of battery cells are connected in series, and adjacent two rows of battery cells are connected in series.

Optionally, each of the battery cell units includes a plurality of battery cell columns, each of the battery cell columns includes a plurality of battery cells arranged along the length direction of the battery pack, and the plurality of battery cell columns are arranged along the width direction of the battery pack; and the plurality of battery cells in each of the battery cell columns are connected in series, and adjacent two battery cell columns are connected in series.

Optionally, the plurality of battery cell units include a first battery cell unit and a second battery cell unit arranged adjacent to each other; and the switch device is arranged in a circuit between a negative electrode of the first battery cell unit and a positive electrode of the second battery cell unit.

Optionally, the first battery cell unit and the second battery cell unit are symmetrically arranged.

Optionally, the first battery cell unit and the second battery cell unit are symmetrically arranged with respect to a centerline in the width direction of the battery pack.

Optionally, the battery pack further includes a first electrical connector and a second electrical connector; the first electrical connector is configured to electrically connect the positive electrode of the first battery cell unit to the positive terminal of the power distribution unit; and the second electrical connector is configured to electrically connect the negative electrode of the first battery cell unit to the negative terminal of the power distribution unit.

Optionally, the battery pack further includes a third electrical connector and a fourth electrical connector; the third electrical connector is configured to electrically connect the positive electrode of the second battery cell unit to the positive terminal of the power distribution unit; the fourth electrical connector is configured to electrically connect the negative electrode of the second battery cell unit to the negative terminal of the power distribution unit; and a circuit between the second electrical connector and the third electrical connector is provided with the switch device.

Optionally, the circuit between the second electrical connector and the third electrical connector is further provided with a fuse connected in series with the switch device.

Optionally, the first battery cell unit and the second battery cell unit are arranged along the width direction of the battery pack; the first electrical connector, the second electrical connector, the third electrical connector, and the fourth electrical connector are located on the same side of the battery pack in the length direction; and in the width direction of the battery pack, the first electrical connector and the fourth electrical connector are two electrical connectors located on an outermost side.

Optionally, in the width direction of the battery pack, the first electrical connector and the fourth electrical connector are symmetrically arranged with respect to a centerline in the width direction of the battery pack; and/or, the second electrical connector and the third electrical connector are symmetrically arranged with respect to the centerline in the width direction of the battery pack.

Optionally, the first electrical connector includes a first extension section, and the fourth electrical connector includes a second extension section; the first extension section and the second extension section extend towards each other along the width direction of the battery pack; and the first extension section is configured to be electrically connected to the positive terminal of the power distribution unit, and the second extension section is configured to be electrically connected to the negative terminal of the power distribution unit.

Optionally, the second electrical connector includes a first connection section, and the third electrical connector includes a second connection section; and the first connection section and the second connection section extend towards each other along the width direction of the battery pack, the first connection section is connected to one of the switch device and the fuse, and the second connection section is connected to the other of the switch device and the fuse.

Optionally, the first battery cell unit includes two battery cell groups arranged along the width direction of the battery pack and connected in series, and the first electrical connector is connected to a positive electrode of the battery cell group in the first battery cell unit located on an outer side in the width direction of the battery pack; the second electrical connector is connected to a negative electrode of the battery cell group in the first battery cell unit located on an inner side in the width direction of the battery pack; the second battery cell unit includes two battery cell groups arranged along the width direction of the battery pack and connected in series; the third electrical connector is connected to a positive electrode of the battery cell group in the second battery cell unit located on an inner side in the width direction of the battery pack; and the fourth electrical connector is connected to a negative electrode of the battery cell group in the second battery cell unit located on an outer side in the width direction of the battery pack.

Optionally, the battery pack further includes a plurality of jumpers and a plurality of adapters; four battery cell groups include a plurality of rows of battery cells arranged along the length direction of the battery pack, each row of battery cells includes a plurality of battery cells arranged along the width direction of the battery pack; and each of the battery cells extends along the length direction of the battery pack, a positive electrode and a negative electrode of the battery cell are arranged at two ends of the battery cell along the length direction of the battery pack, adjacent battery cells in the same row of battery cells are connected in series through the jumper, and adjacent two rows of battery cells are connected in series through the adapter.

Optionally, the adapter includes an adapter straight bar and an adapter bent bar; the adapter straight bar connects two battery cells in adjacent two rows of battery cells with narrow face opposite to each other in the width direction of the battery pack, and the adapter bent bar connects two battery cells in adjacent two rows of battery cells with the narrow face misaligned in the width direction of the battery pack.

Optionally, the second electrical connector and the third electrical connector are located in a middle of the battery pack in the width direction.

Optionally, the first battery cell unit and the second battery cell unit each include a plurality of battery cell columns, each of the battery cell columns includes a plurality of battery cells arranged along the length direction of the battery pack, and the plurality of battery cell columns are arranged along the width direction of the battery pack; and the plurality of battery cells in each of the battery cell columns are connected in series, and adjacent two battery cell columns are connected in series.

Optionally, the first electrical connector is connected to a battery cell column in the first battery cell unit located on an outermost side in the width direction of the battery pack; the second electrical connector is connected to a battery cell column in the first battery cell unit located on an innermost side in the width direction of the battery pack in the first battery cell unit; the third electrical connector is connected to a battery cell column in the second battery cell unit located on an innermost side in the width direction of the battery pack, and the fourth electrical connector is connected to a battery cell column in the second battery cell unit located on an outermost side in the width direction of the battery pack.

Optionally, the plurality of battery cell columns in each of the battery cell units include at least two first battery cell columns, and each of the first battery cell columns includes a plurality of first battery cells arranged along the length direction of the battery pack; in the length direction of the battery pack, the plurality of first battery cells in one first battery cell column are arranged in correspondence with the plurality of first battery cells in adjacent another first battery cell column, to construct a plurality of battery cell pairs, and each of the battery cell pairs includes two first battery cells located in different first battery cell columns; the battery pack further includes a first electrical connection bar and a second electrical connection bar; and two first battery cells in each of the battery cell pairs are connected in series through the first electrical connection bar, and adjacent two battery cell pairs are configured to be connected in series through the second electrical connection bar.

Optionally, in the length direction of the battery pack, positive electrodes of two first battery cells in each of the battery cell pairs are located on the same side; and a positive electrode of one first battery cell in each of the battery cell pairs is electrically connected to a negative electrode of the other first battery cell through the first electrical connection bar, and a positive electrode of one of the adjacent two battery cell pairs is electrically connected to a negative electrode of the other through the second electrical connection bar.

Optionally, the plurality of battery cell columns in each of the battery cell units further include at least one second battery cell column; the second battery cell column and the first battery cell column are arranged along the width direction of the battery pack, and the at least one second battery cell column is connected in series with the first battery cell column; the second battery cell column includes a plurality of second battery cells arranged along the length direction of the battery pack; and the plurality of second battery cells in the same second battery cell column are connected in series.

Optionally, the battery pack further includes a plurality of third electrical connection bars, a plurality of fourth electrical connection bars, and a plurality of fifth electrical connection bars; adjacent two second battery cells in the same second battery cell column are connected in series through the third electrical connection bar; adjacent two second battery cell columns are connected in series through the fourth electrical connection bar; and the first battery cell column and the second battery cell column adjacent to the first battery cell column are connected in series through the fifth electrical connection bar.

According to another aspect of the present invention, an electric apparatus is provided, which includes an apparatus body and the battery pack. The battery pack is installed on the apparatus body and configured to supply power to the apparatus body.

In the above technical solution, by controlling the switch device to selectively connect and disconnect the series circuit, namely, by opening and closing of the switch device, the plurality of battery cell units may be charged separately or may be connected in series to be charged as a whole. When the plurality of battery cell units are separately connected to the power distribution unit for use, the battery pack may be suitable for a charging platform with a low charging voltage, thus having the conventional charging mode; when the plurality of battery cell units are connected in series and then connected to the power distribution unit, it may be suitable for a charging platform with a high charging voltage, thus having the fast charging mode. Therefore, compared to the solution in the related art where a battery pack may only be charged by a charging platform with a fixed voltage, the battery pack provided in the present invention may be suitable for charging platforms with different voltages, that is, it may be compatible with voltage platforms with a variety of voltages, facilitating daily use. In addition, compared to the solution of using the voltage booster in the related art, the solution provided in the present invention is advantageous in reducing costs and facilitating use.

Moreover, since the plurality of battery cell units in the battery pack may have different working modes, and in the different working modes, the number of battery cell units that discharge may vary, therefore it may have different discharge modes, and may provide power supply modes of different voltages to an electric driving member of the electric apparatus, such as a motor of the vehicle.

The other features and advantages of the present invention will be explained in detail in the following specific embodiments section.

### BRIEF DESCRIPTION OF THE DRAWINGS

The drawings are intended to provide a further understanding of the present invention, form a part of the specification, and are used to explain the present invention together with the specific embodiments below, but do not constitute a limitation of the present invention, in which:
FIG. 1 is a perspective schematic diagram of partial structure of a battery pack provided by an embodiment of the present invention, in which a power distribution unit is not shown.
FIG. 2 is an enlarged view of part A in FIG. 1.
FIG. 3 is an arrangement of a plurality of electrical connectors configured to connect a battery cell of a battery cell unit in series and to connect a power distribution unit in series in a battery pack provided by an embodiment of the present invention.
FIG. 4 is a schematic diagram of wiring of a battery cell group at an adapter bent bar of part B in FIG. 3.
FIG. 5 is an arrangement of a plurality of battery cell units in a battery pack provided by an embodiment of the present invention, in which four battery cell groups, a first battery cell unit, and a second battery cell unit are schematically shown with frame lines.
FIG. 6 is a perspective schematic diagram of a battery pack provided by an embodiment of the present invention, in which a power distribution unit and an insulating member are shown.
FIG. 7 is a schematic diagram of a circuit principle between a battery cell unit and a power distribution unit provided by an embodiment of the present invention.
FIG. 8 is a structural diagram of a battery cell unit in a battery pack provided by another embodiment of the present invention, in which two battery cell units are shown, and a first electrical connector, a second electrical connector, a third electrical connector, and a fourth electrical connector are not shown.
FIG. 9 is a structural diagram of a battery cell unit in a battery pack provided by an embodiment of the present invention, in which a boundary between two battery cell units is schematically shown with a dashed line, and a first battery cell column and a second battery cell column are shown with dashed frames.
FIG. 10 is an enlarged view of part A in FIG. 9.
FIG. 11 is an enlarged view of part A in FIG. 9, in which directions of circuit paths of two first battery cell columns is shown with dashed lines.
FIG. 12 is a schematic diagram of a direction of a circuit path of a single battery cell unit in FIG. 9, with a positive electrode and a negative electrode at the same end.

### References signs:

10 switch device, 20 battery cell unit, 21 first battery cell unit, 22 second battery cell unit, 23 battery cell, 24 battery cell group, 25 first battery cell column, 251 first battery cell, 252 battery cell pair, 26 second battery cell column, 261 second battery cell, 30 power distribution unit, 40 fuse, 51 first electrical connector, 511 first extension section, 52 second electrical connector, 521 first connection section, 53 third electrical connector, 531 second connection section, 54 fourth electrical connector, 541 second extension section, 55 jumper, 56 adapter, 561 adapter straight bar, 562 adapter bent bar, 571 first electrical connection bar, 5711 first section, 5712 second section, 5713 third section, 572 second electrical connection bar, 5721 fourth section, 5722 fifth section, 5723 sixth section, 573 third electrical connection bar, 574 fourth electrical connection bar, 575 fifth electrical connection bar, 60 insulating member, 70 battery pack case.

### DETAILED DESCRIPTION

Embodiments of the present invention are described in detail below in conjunction with the drawings. It should be understood that the specific embodiments described herein are intended to explain the present invention, but not to limit the present invention.

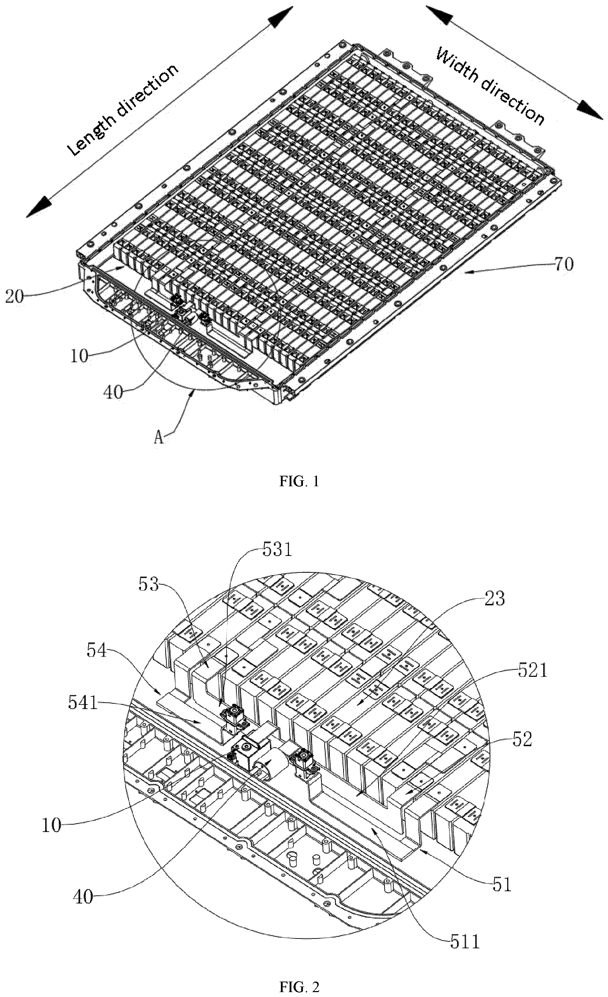

It should be understood in the present invention that, in the absence of contrary explanation, the orientation or position relationship indicated by the directional words such as "up" and "down" used is defined based on the direction of the drawing shown in the corresponding drawings, which is only for the convenience of describing the present invention and simplifying the description, and does not indicate or imply that the referred device or element must have a specific orientation, and be constructed and operated in a specific orientation, so it cannot be understood as a limitation of the present invention, and the terms "inner" and "outer" may refer to the inside and outside of the contour of the corresponding structure. The "width direction" and "length direction" may refer to the width direction and length direction shown in FIG. 1, FIG. 6, FIG. 8, and FIG. 9. In addition, it should be noted that terms such as "first" and "second" used are intended to distinguish one element from another and are not sequential or important. In addition, in the description of the reference drawings, the same number in different drawings represents the same element.

In the description of the present invention, it should also be noted that, unless otherwise expressly defined, terms such as "arranged", "couple", "connect", "install/mount" shall be understood broadly, and may be, for example, fixed connections, detachable connections, or integral connections; may also be direct connections or indirect connections via intervening media. For those skilled in the art, the specific meaning of the above terms in the present invention may be understood according to the specific situations.

It should be noted that all actions to obtain signals, information, or data in this disclosure are carried out in accordance with the corresponding data protection regulations and policies of the country where they are located, and with authorization granted by the owner of the corresponding device.

For specific electric apparatuses (such as vehicles), once a battery pack is installed in place, it is usually only suitable for a fixed charging voltage. Although a voltage booster may be used in related art for being compatible with charging platforms with different voltages, such as charging piles, it will increase additional costs and is inconvenient for daily use.

Research has found that in the related art, the reason why electric apparatuses such as vehicles cannot be applied to voltage platforms with different values is that there is only one charging voltage for each battery pack, that is, the electric apparatuses are only suitable for charging on charging platforms (such as charging piles) with a specific charging voltage, such as charging platforms with 400V (voltage) or 800V (voltage). The traditional 400V charging platform is limited by hardware capabilities and cannot achieve high charging power. Generally, the charging time is over 30 minutes, while the 800V charging platform may increase charging power and reduce charging time to 15 minutes. However, most charging platforms on the market are 400V charging platforms, which are not compatible with 800V and other voltage platforms. Although a voltage booster may be included with the vehicle in the related art to be compatible with most 400V charging platforms on the market (such as charging piles), it will increase additional costs and be inconvenient for daily use.

In view of this, the present invention proposes a battery pack that is suitable for a plurality of charging voltages in combination with the design of the battery pack to be compatible with different charging platforms. The battery pack may have conventional charging and fast charging modes.

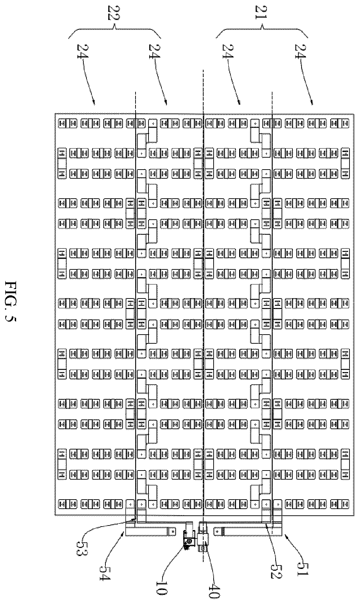

Specifically, as shown in FIGS. 1 to 12, the present invention provides a battery pack including a battery pack case 70, a switch device 10, and a plurality of battery cell units 20. The plurality of battery cell units 20 are arranged in the battery pack case 70, a battery cell accommodating cavity may be defined inside the battery pack case 70, and the plurality of battery cell units 20 may be arranged in the battery cell accommodating cavity. A positive electrode of each of the battery cell units 20 is configured to be electrically connected with a positive terminal of a power distribution unit 30 (e.g., a battery disconnect unit, BDU), and a negative electrode of each of the battery cell units 20 is configured to be electrically connected with a negative terminal of the power distribution unit 30. Furthermore, the plurality of battery cell units 20 are sequentially arranged in a series circuit of the battery pack, and two ends of the series circuit are connected to the positive terminal and the negative terminal of the power distribution unit 30, respectively. The switch device 10 is arranged in a series circuit of the plurality of battery cell units 20 for connecting or disconnecting the series circuit between the plurality of battery cell units 20, to connect the plurality of battery cell units 20 in series to the series circuit or disconnect the series connection between the plurality of battery cell units 20.

In the present invention, the power distribution unit 30 is a battery energy distribution unit, which is an important part of a high voltage circuit of the electric apparatus (such as vehicles). The battery energy distribution unit may distribute high voltage electricity of the battery pack to the electric apparatus, thereby enabling the battery pack to supply power to the electric apparatus. In addition, the power distribution unit 30 may distribute high voltage charging current of AC and DC charging interface to the battery pack for charging the battery pack.

In the above technical solution, by controlling the switch device 10 to selectively connect and disconnect the series circuit, namely, by opening and closing of the switch device 10, the plurality of battery cell units 20 may be charged separately or may be connected in series to charge as a whole. When the plurality of battery cell units 20 may be separately connected to the power distribution unit 30 for use, the battery pack may be suitable for a charging platform with a low charging voltage, thus having the conventional charging mode; when the plurality of battery cell units 20 are connected in series and then connected to the power distribution unit 30, it may be suitable for a charging platform with a high charging voltage, thus having the fast charging mode. Therefore, compared to the solution in the related art where battery packs may only be charged by charging platforms with a fixed voltage, the battery pack provided in the present invention may be suitable for charging platforms with different voltages, that is, it may be compatible with voltage platforms with a variety of voltages, facilitating daily use. In addition, compared to the solution of using the voltage booster in the related art, the solution provided in the present invention is advantageous in reducing costs and facilitating use.

Moreover, a single battery pack case 70 in the battery pack of the present invention may accommodate the plurality of battery cell units 20, in which the plurality of battery cell units 20 may be used in series or be used separately. Since the plurality of battery cell units 20 are arranged in the single battery pack case 70, there is no need for each battery cell unit 20 to be arranged in one battery pack case 70. Additionally, the plurality of battery cell units 20 may share components (such as a heat exchange structure), thus the space for the battery pack may be saved, and it is beneficial for improving the energy density of the battery pack. Since the plurality of battery cell units 20 in the battery pack may have different working modes, and in the different working modes, the number of battery cell units 20 that discharge may vary, therefore it may have different discharge modes, and may provide power supply modes of different voltages to an electric driving member of the electric apparatus, such as a motor of the vehicle.

It may be understood that the present invention does not limit the number of the plurality of battery cell units 20, and the plurality of battery cell units 20 may be designed with two or more. The number of battery cells 23 included in each battery cell unit 20 is also not limited, which may be designed according to the voltage of the charging platform that needs to be compatible, as long as it meets the requirements of being able to convert voltage and compatible with charging platforms of different voltages. Optionally, the voltage suitable for charging or discharging the battery pack may be 400V-800V, including 400V and 800V. For example, currently, it is necessary to be compatible with charging piles of 400V and 800V. In order to adapt to their voltages, two battery cell units 20 suitable for 400V charging platforms may be designed, or four battery cell units 20 suitable for 200V charging platforms may be designed, as long as it meets the requirements of being compatible with charging platforms of different voltages, and there is no limitation on the voltage suitable for a designed single battery cell unit 20.

For example, two battery cell units 20 suitable for 400V charging platforms are provided. When the connected charging pile is 400V, only a single battery cell unit 20 needs to be charged, at this time, the switch device 10 between the two battery cell units 20 may be disconnected, and the positive and negative electrodes of one battery cell unit 20 are connected to the positive and negative terminals of the power distribution unit 30 to complete the connection of the circuit, while the other battery cell unit 20 is not charged. When the connected charging pile is 800V, the two battery cell units 20 work in series, at this time, the switch device 10 between the two battery cell units 20 is closed, the positive electrode of one battery cell unit 20 is connected to the negative electrode of the other battery cell unit 20, and positive and negative electrodes of the total circuit after series connection are connected to the positive and negative terminals of the power distribution unit 30, completing the connection of the circuit, and at this time, the two battery cell units 20 may be charged, thus it is compatible with 400V and 800V charging platforms (charging piles).

The present invention does not limit the types of the switch device 10, which may be a relay, an electronic switch, a thyristor, a switching diode, etc., as long as the switch device 10 may perform a function of disconnecting circuit in the series circuit when a single battery cell unit 20 is required to work, and may perform a function of closing circuit in the series circuit when a plurality of battery cell units 20 are required to work.

In an embodiment of the switch device 10 as the relay, the relay may significantly accelerate the switching time, eliminate arcing and noise in electrical components, and fundamentally have better reliability and predictability and a longer service life.

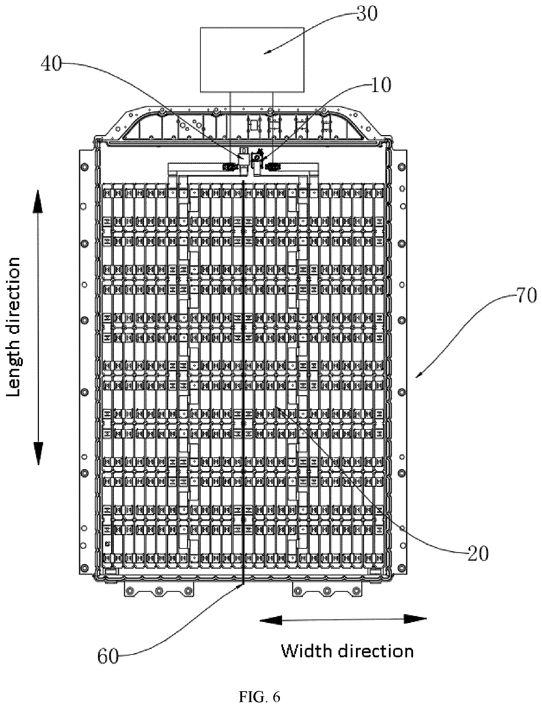

In the present invention, the power distribution unit 30 may serve as a part of the battery pack, or it may also not belong to the battery pack, but be an electrical component connected to the battery pack, which is not limited in the present invention. As shown in FIG. 6, in an embodiment of the present invention, the battery pack may include the power distribution unit 30, i.e., in FIG. 6, the power distribution unit 30 is part of the battery pack.

In the present invention, as shown in FIGS. 2, 3, and 9, the battery pack may further include a fuse 40, which is arranged in the series circuit where the plurality of battery cell units 20 are located. Due to the arrangement of fuse 40, in the event of a short circuit in a high voltage circuit of the battery pack, in addition to disconnecting the series circuit through the above-mentioned switch device 10 to disconnect the high voltage circuit of the battery pack, the fuse 40 may also be used to timely disconnect the high voltage circuit, the risk of thermal runaway caused by high voltage arcing may be avoided, and the safety performance of the battery pack is improved.

In order to avoid mutual influence between the battery cell units 20, as shown in FIG. 6, the battery pack may further include at least one insulating member 60 arranged between adjacent battery cell units 20. The insulating member 60 is provided to establish an isolation boundary between the battery cell units 20 for physical isolation. When one of the battery cell units 20 occurs thermal runaway, the insulating member 60 may isolate the battery cell units 20, the spread of thermal runaway to other battery cell units 20 may be avoided, the normal work of the other battery cell units 20 may be ensured, such as continuous discharge to the outside, and thus it is beneficial for improving the thermal runaway protection of the battery pack.

For example, in an embodiment of the battery cell unit 20 including a first battery cell unit 21 and a second battery cell unit 22 as shown in FIGS. 1 to 3, the physical isolation is achieved because the isolation boundary is arranged between the first battery cell unit 21 and the second battery cell unit 22, which may be isolated in the first moments of thermal runaway. The thermal runaway is effectively isolated in one of the battery cell units 20 (such as the first battery cell unit 21), and another independent battery cell unit 20 (such as the second battery cell unit 22) will not be easily affected.

The present invention does not limit the number of the insulating members 60. In an embodiment shown in FIG. 6, there are two battery cell units 20 and one insulating member 60, and the insulating member 60 divides the battery pack case 70 (a battery tray) into two left-right symmetrical portions in a width direction of the battery pack.

In the present invention, the number of the plurality of battery cell units 20 may be an even number. The number of the battery cell units 20 is set to an even number, which facilitates the overall arrangement of the battery pack, for example, the plurality of battery cell units 20 may be symmetrically arranged along a centerline in the battery pack.

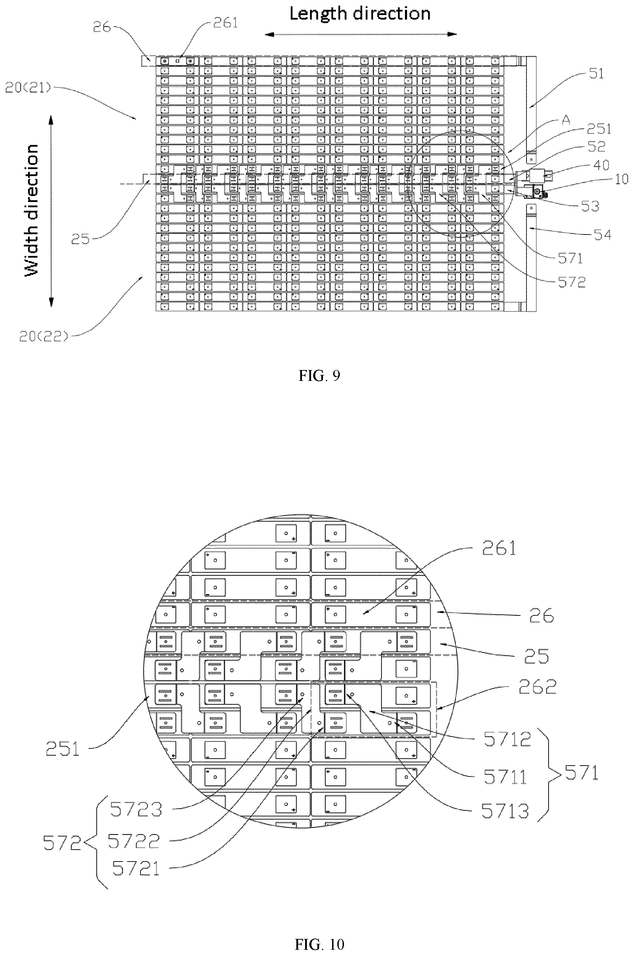

In order to improve the utilization of an internal space of the battery pack and facilitate the connection of the power distribution unit 30, as shown in FIGS. 2 and 9, optionally, the positive electrode and the negative electrode of the battery cell unit 20 in the plurality of battery cell units 20 are located on the same side of the battery pack, that is, the electrodes (the positive electrodes and the negative electrodes) of all the battery cell units 20 in the plurality of battery cell units 20 are located on the same side of the battery. The battery cell unit 20 includes a plurality of battery cells 23 connected in series, the battery cells 23 connected in series are connected by ends of the positive and negative electrodes, and the positive and negative electrodes of the battery cell unit 20 are head and tail positions of the battery cells 23 connected in series. When the battery cell unit 20 is in use, its positive and negative electrodes need to be connected to the power distribution unit 30, and the positive and negative electrodes of the battery cell unit 20 are arranged on the same side of the battery pack, so that the positive and negative electrodes of the battery cell unit 20 may be connected to the power distribution unit 30 in close proximity, without the need to design a longer connection bar (used when the positive and negative electrodes of the battery cell unit 20 are located on different sides of the battery pack). This facilitates the integration and reasonable arrangement of electric components between the battery cell unit 20 and the power distribution unit 30 (such as a first electrical connector 51, a second electrical connector 52, a third electrical connector 53, a fourth electrical connector 54, the switch device 10, and the fuse 40, etc. in the following description), and is conducive to saving space, simplify the structure and facilitate connection. In addition, during maintenance, because the positive and negative electrodes are arranged at the same end, when the electric apparatus is opened for maintenance, it may only open one side for inspection, and the maintenance is convenient.

The present invention does not limit the specific arrangement orientation of the positive electrode and the negative electrode of the battery cell unit 20 on the battery pack, which may be designed according to the specific arrangement of the battery cell 23 in the battery cell unit 20. As shown in FIGS. 1, 2, 8, and 9, the plurality of battery cell units 20 are arranged along the width direction of the battery pack, each of the battery cell units 20 includes at least one battery cell group 24, and a battery cell 23 in each of the battery cell groups 24 extends along a length direction of the battery pack, and the positive electrode and the negative electrode of each of the battery cell units 20 are located on the same side of the battery pack in the length direction. In other words, in an embodiment shown in FIGS. 1, 2, 8, and 9, a wide surface (large surface) of each of the battery cells 23 is oriented towards the width direction of the battery pack, a narrow surface (small surface) of each of the battery cells 23 is oriented towards the length direction of the battery pack, and the positive electrode and the negative electrode of the battery cell unit 20 are located in a direction corresponding to the narrow surface of the battery cell 23.

The present invention does not limit the number of battery cells 23 in each of the battery cell groups 24, as shown in FIGS. 1 and 2, each of the battery cell groups 24 includes a plurality of rows of battery cells 23 arranged along the length direction of the battery pack, and each row of battery cells includes a plurality of battery cells 23 arranged along the width direction of the battery pack. In the same battery cell group 24, the battery cells 23 in each row of battery cells are connected in series, and adjacent two rows of battery cells 23 are connected in series.

As mentioned above, the present invention does not limit the number of battery cell units 20. As an optional embodiment, as shown in FIGS. 1, 2 and 5, the plurality of battery cell units 20 may include the first battery cell unit 21 and the second battery cell unit 22, a positive electrode of the first battery cell unit 21 is configured to be electrically connected to the positive terminal of the power distribution unit 30, and a negative electrode of the first battery cell unit 21 is configured to be electrically connected to the negative terminal of the power distribution unit 30; a positive electrode of the second battery cell unit 22 is configured to be electrically connected to the positive terminal of the power distribution unit 30, and a negative electrode of the second battery cell unit 22 is configured to be electrically connected to the negative terminal of the power distribution unit 30. The switch device 10 is arranged in a circuit between the negative electrode of the first battery cell unit 21 and the positive electrode of the second battery cell unit 22.

That is, the number of the plurality of battery cell units 20 may be two, two battery cell units 20 are the first battery cell unit 21 and the second battery cell unit 22, respectively. The first battery cell unit 21 and the second battery cell unit 22 may be connected in series, and the switch device 10 is provided in the series circuit. When the switch device 10 is disconnected, the positive electrode and the negative electrode of the first battery cell unit 21 are connected to the positive and negative terminals of the power distribution unit 30, respectively; or the positive electrode and the negative electrode of the second battery cell unit 22 are connected to the positive and negative terminals of the power distribution unit 30, respectively; and the first battery cell unit 21 or the second battery cell unit 22 may be selected for separate charging or discharging. When the switch device 10 is closed, the positive electrode of the first battery cell unit 21 is connected to the positive terminal of the power distribution unit 30, the negative electrode of the first battery cell unit 21 is connected to the positive electrode of the second battery cell unit 22 through the closed switch device 10, the negative electrode of the second battery cell unit 22 is connected to the negative terminal of the power distribution unit 30, and at this time, the first battery cell unit 21 and the second battery cell unit 22 are used in series.

In order to simplify the structure and improve the space utilization of the battery cell accommodating cavity in the battery pack case 70, the first battery cell unit 21 and the second battery cell unit 22 may be symmetrically arranged. For example, as shown in FIG. 6, the insulating member 60 divides the battery cell accommodating cavity of the battery pack case 70 into two chambers, the first battery cell unit 21 and the second battery cell unit 22 are located in respective chambers and symmetrically arranged, thus facilitating designing the chambers to accommodate the first battery cell unit 21 and the second battery cell unit 22.

It may be understood that, the first battery cell unit 21 and the second battery cell unit 22 are symmetrically arranged, which refers to at least the battery cells 23 of the first battery cell unit 21 and the battery cells 23 of the second battery cell unit 22 are symmetrically arranged. The relevant electrical connectors or electrical connection bars of the first battery cell unit 21 (a first electrical connector 51, a second electrical connector 52, a jumper 55, an adapter 56, a first electrical connection bar 571, a second electrical connection bar 572, a third electrical connection bar 573, a fourth electrical connection bar 574, and a fifth electrical connection bar 575 as described below) and the relevant electrical connectors of the second battery cell unit 22 (third electrical connector 53, fourth electrical connector 54, the jumper 55, the adapter 56, the first electrical connection bar 571, the second electrical connection bar 572, the third electrical connection bar 573, the fourth electrical connection bar 574, and the fifth electrical connection bar 575 as described below) may be arranged symmetrically or asymmetrically, and the present invention does not limit this.

Optionally, the respective electrical connectors or electrical connection bars in the first battery cell unit 21 and the second battery cell unit 22 may be symmetrically arranged, which facilitates the arrangement and assembly of the electrical connectors or the electrical connection bars in the battery pack.

In the present invention, according to the arrangement of the battery cells 23 in the battery cell unit 20, the first battery cell unit 21 and the second battery cell unit 22 may be symmetrically arranged with respect to any direction. For example, they may be symmetrical with respect to the length direction of the battery pack, or symmetrical with respect to the width direction of the battery pack, or symmetrical with respect to other suitable directions. The present invention does not limit this.

Optionally, as shown in FIGS. 1 and 6, the first battery cell unit 21 and the second battery cell unit 22 are symmetrically arranged with respect to a centerline in the width direction of the battery pack. The symmetrical arrangement along the centerline in the width direction of the battery pack not only ensures the reasonable arrangement of the battery pack, but also facilitates arranging the positive and negative electrodes of the first battery cell unit 21 and the second battery cell unit 22 on one side of the battery pack along the length direction in conjunction with the arrangement direction of the battery cells 23. At this time, referring to FIG. 6, the insulating member 60 equivalently extends along the length direction of the battery pack and is located on the centerline in the width direction of the battery pack.

In the present invention, in order to facilitate the electrical connection of the first battery cell unit 21 and the second battery cell unit 22 with the power distribution unit 30, as shown in FIGS. 1 to 3 and FIG. 9, the battery pack further includes the first electrical connector 51 and the second electrical connector 52. The first electrical connector 51 is configured to electrically connect the positive electrode of the first battery cell unit 21 to the positive terminal of the power distribution unit 30, and the second electrical connector 52 is configured to electrically connect the negative electrode of the first battery cell unit 21 to the negative terminal of the power distribution unit 30.

The first electrical connector 51 and the second electrical connector 52 include but are not limited to connection bars, connection wires, etc. The first electrical connector 51 may be configured to electrically connect the positive electrode of the first battery cell unit 21 to the positive terminal of the power distribution unit 30 when the first battery cell unit 21 is used alone, or to electrically connect the positive electrode of the first battery cell unit 21 to the positive terminal of the power distribution unit 30 when the first battery cell unit 21 and the second battery cell unit 22 are connected in series. The second electrical connector 52 is configured to connect the negative electrode of the first battery cell unit 21 to the negative terminal of the power distribution unit 30 when the first battery cell unit 21 is used alone.

As shown in FIGS. 1 to 3 and FIG. 9, the battery pack may further include the third electrical connector 53 and the fourth electrical connector 54. The third electrical connector 53 is configured to electrically connect the positive electrode of the second battery cell unit 22 to the positive terminal of the power distribution unit 30, and the fourth electrical connector 54 is configured to electrically connect the negative electrode of the second battery cell unit 22 to the negative terminal of the power distribution unit 30.

The third electrical connector 53 and the fourth electrical connector 54 include but are not limited to connection bars, connection wires, etc. The third electrical connector 53 is configured to connect the positive electrode of the second battery cell unit 22 to the positive terminal of the power distribution unit 30 when the second battery cell unit 22 is used alone. The fourth electrical connector 54 may be configured to connect the negative electrode of the second battery cell unit 22 to the negative terminal of the power distribution unit 30 when the second battery cell unit 22 is used alone, or to connect the negative electrode of the second battery cell unit 22 to the negative terminal of the power distribution unit 30 when the first battery cell unit 21 and the second battery cell unit 22 are connected in series.

In the present invention, optionally, the first electrical connector 51, the second electrical connector 52, the third electrical connector 53, and the fourth electrical connector 54 may be copper aluminum composite bars, which may be welded to the corresponding electrode of the battery cell.

As shown in FIGS. 1 to 3 and 9, a circuit between the second electrical connector 52 and the third electrical connector 53 may be provided with the switch device 10 mentioned above. When the first battery cell unit 21 needs to be used alone or when the second battery cell unit 22 is used alone, the switch device 10 may be disconnected; when the first battery cell unit 21 and the second battery cell unit 22 need to be used in series, the switch device 10 may be closed.

In addition, as shown in FIGS. 1 to 3 and 9, the circuit between the second electrical connector 52 and the third electrical connector 53 may further be provided with the fuse 40 mentioned above, that is, the fuse 40 is connected in series with the switch device 10 between the second electrical connector 52 and the third electrical connector 53.

As shown in FIGS. 1 to 3 and 9, the first battery cell unit 21 and the second battery cell unit 22 may be arranged along the width direction of the battery pack; the first electrical connector 51, the second electrical connector 52, the third electrical connector 53, and the fourth electrical connector 54 are located on the same side of the battery pack in the length direction. In the width direction of the battery pack, the first electrical connector 51 and the fourth electrical connector 54 are two electrical connectors located on an outermost side, that is, in the width direction of the battery pack, the second electrical connector 52 is located between the first electrical connector 51 and the fourth electrical connector 54, and the third electrical connector 53 is located between the first electrical connector 51 and the fourth electrical connector 54. In this design, each connector is arranged at the same side, which is convenient for arrangement and installation in an initial stage, and convenient for maintenance and replacement in a later stage.

Moreover, since the first electrical connector 51 and the fourth electrical connector 54 are the two electrical connectors located on the outermost side, and the second electrical connector 52 and the third electrical connector 53 are two electrical connectors located in the middle, it is convenient to arrange the switch device 10 and the fuse 40 shown in FIG. 1 in the circuit between the second electrical connector 52 and the third electrical connector 53.

As shown in FIGS. 1, 2, and 9, optionally, in the width direction of the battery pack, the first electrical connector 51 and the fourth electrical connector 54 may be symmetrically arranged with respect to the centerline in the width direction of the battery pack; and the second electrical connector 52 and the third electrical connector 53 may be symmetrically arranged with respect to the centerline in the width direction of the battery pack. Symmetrical arrangement may simplify the structure, save space, and also facilitate the connection of each electrical connector with the corresponding electric component.

For example, when the first battery cell unit 21 is used alone, the first electrical connector 51 and the second electrical connector 52 on the first battery cell unit 21 are connected to the power distribution unit 30. Since the first electrical connector 51 and the fourth electrical connector 54, and the second electrical connector 52 and the third electrical connector 53 are symmetrically arranged with respect to the centerline in the width direction of the battery pack, there is no influence between the first electrical connector 51 and the second electrical connector 52 on the first battery cell unit 21 and the third electrical connector 53 and the fourth electrical connector when the first electrical connector 51 and the second electrical connector 52 is connected to the power distribution unit 30. Moreover, the first battery cell unit 21 and the second battery cell unit 22 are also symmetrically arranged with respect to the centerline in the width direction of the battery pack, thus ensuring mutual independence when used alone, and also ensuring the neat and reasonable arrangement in the battery pack.

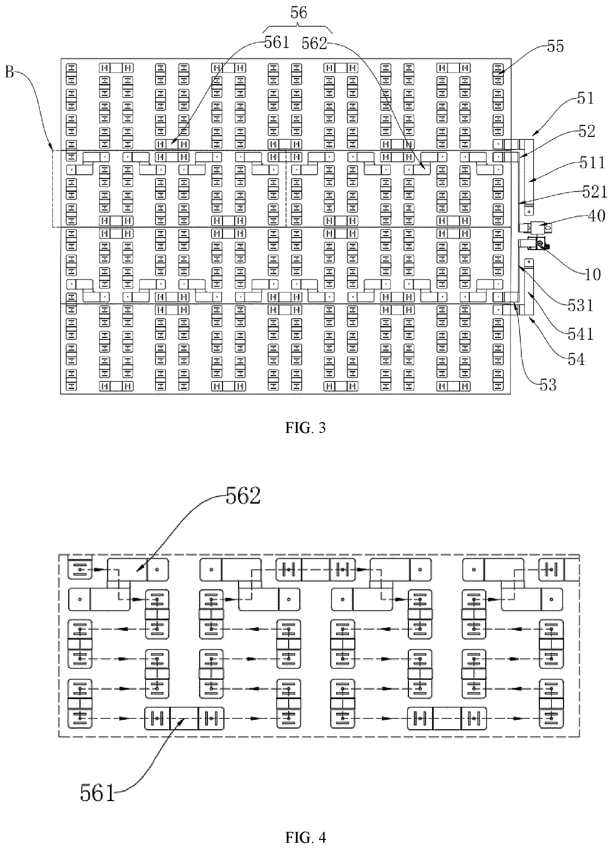

As shown in FIGS. 2 and 3, in an embodiment of the present invention, the first electrical connector 51 includes a first extension section 511, the fourth electrical connector 54 includes a second extension section 541, and the first extension section 511 and the second extension section 541 extend towards each other along the width direction of the battery pack. The first extension section 511 is configured to be electrically connected to the positive terminal of the power distribution unit 30, and the second extension section 541 is configured to be electrically connected to the negative terminal of the power distribution unit 30. This arrangement may allow the first electrical connector 51 and the fourth electrical connector 54 to have a connection point near a middle of the battery pack, thus facilitating the connection of the power distribution unit 30. As shown in FIGS. 2 and 3, the second electrical connector 52 includes a first connection section 521, the third electrical connector 53 includes a second connection section 531, and the first connection section 521 and the second connection section 531 extend towards each other along the width direction of the battery pack. The first connection section 521 is connected to one of the switch device 10 and the fuse 40, and the second connection section 531 is connected to the other of the switch device 10 and the fuse 40. Optionally, the first connection section 521 is connected to the fuse 40, and the second connection section 531 is connected to the switch device 10. This arrangement facilitates the concentration of the switch device 10 and the fuse 40 in a middle of the battery pack in the width direction, facilitating the connection of the power distribution unit 30 and improving the position integration of electrical elements between the battery cell unit 20 and the power distribution unit 30.

In the present invention, the first electrical connector 51 may further include a first connection portion connected to the positive electrode of the first battery cell unit 21, and the first connection portion is connected to the first extension section 511. The fourth electrical connector 54 may further include a second connection portion connected to the negative electrode of the second battery cell unit 22, and the second connection portion is connected to the second extension section 541.

The present invention does not limit the number of battery cell groups 24 in the first battery cell unit 21 and the second battery cell unit 22. As shown in FIGS. 1, 2 and 5, in an embodiment of the present invention, the first battery cell unit 21 includes two battery cell groups 24 arranged along the width direction of the battery pack and connected in series, and the second battery cell unit 22 includes two battery cell groups 24 arranged along the width direction of the battery pack and connected in series. The first electrical connector 51 is connected to a positive electrode of the battery cell group 24 in the first battery cell unit 21 located on an outer side in the width direction of the battery pack, the second electrical connector 52 is connected to a negative electrode of the battery cell group 24 in the first battery cell unit 21 located on an inner side in the width direction of the battery pack, the third electrical connector 53 is connected to a positive electrode of the battery cell group 24 in the second battery cell unit 22 located on an inner side in the width direction of the battery pack, and the fourth electrical connector 54 is connected to a negative electrode of the battery cell group 24 in the second battery cell unit 22 located on an outer side in the width direction of the battery pack.

In this way, when the first battery cell unit 21 works alone, the two battery cell groups 24 in the first battery cell unit 21 are connected in series and may be electrically connected to the positive terminal and the negative terminal of the power distribution unit 30 through the first electrical connector 51 and the second electrical connector 52 respectively. When the second battery cell unit 22 works alone, the two battery cell groups 24 in the second battery cell unit 22 are connected in series and may be electrically connected to the positive terminal and the negative terminal of the power distribution unit 30 through the third electrical connector 53 and the fourth electrical connector 54, respectively.

When the first battery cell unit 21 and the second battery cell unit 22 are connected in series, the two battery cell groups 24 in the first battery cell unit 21 are connected in series, and the two battery cell groups 24 in the second battery cell unit 22 are connected in series. Furthermore, the battery cell group 24 in the first battery cell unit 21 adjacent to the second battery cell unit 22, and the battery cell group 24 in the second battery cell unit 22 adjacent to the first battery cell unit 21 may be connected in series through the second electrical connector 52 and the third electrical connector 53; the battery cell group 24 in the first battery cell unit 21 away from the second battery cell unit 22 may be connected to the positive terminal of the power distribution unit 30 through the first electrical connector 51; and the battery cell group 24 in the second battery cell unit 22 away from the first battery cell unit 21 is connected to the negative terminal of the power distribution unit 30 through the fourth electrical connector 54.

The present invention does not limit the number of battery cells in each of the battery cell groups 24, as shown in FIGS. 1 and 2, four battery cell groups 24 include a plurality of rows of battery cells 23 arranged along the length direction of the battery pack, each row of battery cells includes a plurality of battery cells 23 arranged along the width direction of the battery pack, and each battery cell 23 extends along the length direction of the battery pack. In the same battery cell group 24, the battery cells 23 in each row of battery cells are connected in series, and adjacent two rows of battery cells are connected in series.

The present invention does not limit the series connection method between the battery cells 23 in each row of battery cells, nor does it limit the series connection method between the adjacent two rows of battery cells. As shown in FIGS. 3 to 5, the battery pack may further include a plurality of jumpers 55 and adapters 56, adjacent battery cells 23 in the same row of battery cells are connected in series through the jumper 55, and the adjacent two rows of battery cells are connected in series through the adapter 56. In an embodiment shown in FIGS. 1 to 5, in the same row of battery cells, adjacent battery cells 23 have the wide face opposite to each other, while in adjacent two rows of battery cells 23 of the same battery cell group 24, adjacent battery cells 23 have the narrow face opposite to each other.

The jumper 55 and the adapter 56 include but are not limited to electrical connection bars, electrical connection pieces, etc. For example, both the jumper 55 and the adapter 56 may adopt aluminum bars, and may be connected to the positive electrode or the negative electrode of the battery cell 23 by welding.

In order to ensure that the positive and negative electrodes of the first battery cell unit 21 and the second battery cell unit 22 may be located on the same side of the battery pack, as shown in FIGS. 3 to 5, the adapter 56 may include an adapter straight bar 561 and an adapter bent bar 562. The adapter straight bar 561 connects two battery cells in adjacent two rows of battery cells with the narrow face opposite to each other in the width direction of the battery pack, and the adapter bent bar 562 connects the positive electrode and the negative electrode of two battery cells 23 in adjacent two rows of battery cells with the narrow faces misaligned in the width direction of the battery pack, where the positive electrodes of the two battery cells 23 are oriented towards the same side.

In this way, the adapter straight bar 561 may directly connect the battery cells 23 in adjacent rows with narrow face opposite to each other, achieving a series connection effect; the adapter bent bar 562 may bridge two battery cells 23 in adjacent rows with wide face opposite to each other and the positive electrodes oriented towards the same side. As shown in FIG. 4, this arrangement may allow the positive and negative electrodes of the connected two battery cells 23 to be located on opposite sides in the length direction of the battery pack, to facilitate the connection with other battery cells 23 (the number is an odd number), and allow the electrodes (such as the positive electrodes and the negative electrodes) after all the battery cells 23 are connected to be located at the same end of the battery pack in the length direction.

It may be understood that, in the present invention, the wide surface of the battery cell 23 refers to a surface with a relatively large area among a plurality of face of the battery cell 23 located in the length direction of the battery pack. For example, in an installed state where the battery pack is mounted on a bottom of the vehicle, the wide surface of the battery cell 23 is a surface defined by edges in a length direction and a height direction of the battery cell 23. The narrow surface of the battery cell 23 is a surface defined by edges in a width direction and the height direction of the battery cell 23.

The present invention does not limit the specific shapes of the jumper 55, the adapter straight bar 561, and the adapter bent bar 562. Optionally, as shown in FIGS. 3 to 5, the jumper 55 and the adapter straight bar 561 may be in a "-" shape, and the adapter bent bar 562 may be or approximately be in a "Z" shape, to facilitate the bridging of adjacent rows of battery cells 23 with the narrow faces misaligned and opposite to each other.

It may be understood that, when it is necessary to design that the electrodes (the positive electrodes and the negative electrodes) of the plurality of battery cell units 20 are arranged on the same side of the battery pack, the first battery cell unit 21 is provided with two battery cell groups 24, and the second battery cell unit 22 is provided with two battery cell groups 24, in the same battery cell unit, a wire may be routed from the positive electrode of one battery cell group 24 and then looped back from the other battery cell group 24.

As shown in FIGS. 3 to 5, the connection diagram of the local circuit in one battery cell unit (the first battery cell unit 21) is illustrated by dashed arrows.

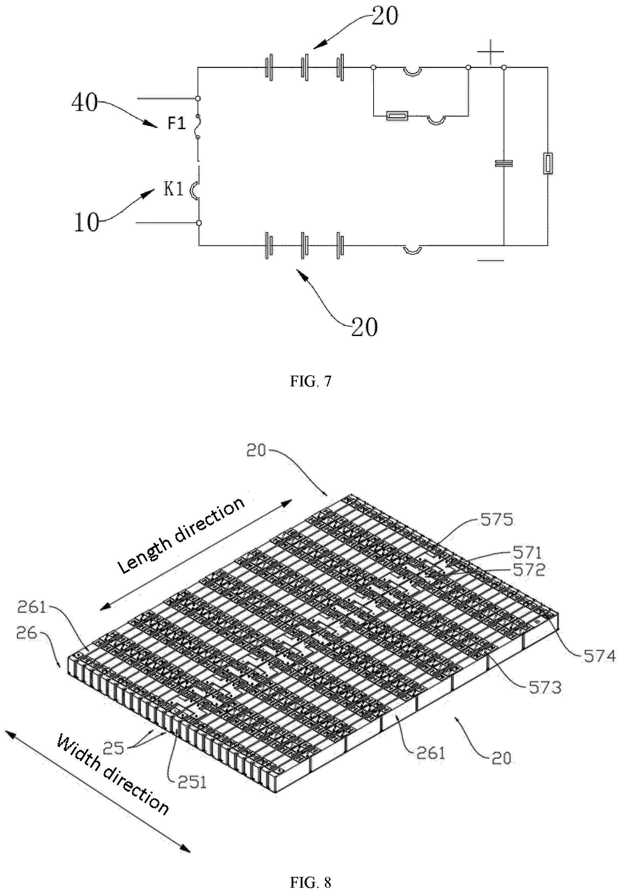

In another embodiment of the present invention, as shown in FIGS. 8 to 12, the second electrical connector 52 and the third electrical connector 53 are located in a middle of the battery pack in the width direction. Because when two battery cell units 20 are used in series, the first battery cell unit 21 and the second battery cell unit 22 are connected through the second electrical connector 52 and the third electrical connector 53, this design may facilitate the integration of the connection of the electrodes of the two battery cell units 20.

In the present invention, optionally, the first battery cell unit 21 and the second battery cell unit 22 each include a plurality of battery cell columns, each battery cell column includes a plurality of battery cells 23 arranged along the length direction of the battery pack, and the plurality of battery cell columns are arranged along the width direction of the battery pack; the plurality of battery cells 23 in each battery cell column are connected in series, and adjacent two battery cell columns are connected in series. The battery cell column may be formed by connecting in series the plurality of battery cells 23 arranged along the length direction of the battery pack, and the plurality of battery cell columns are connected in series to form the battery cell unit 20.

In the present invention, optionally, as shown in FIG. 9, the first electrical connector 51 is connected to the battery cell column in the first battery cell unit 21 located on an outermost side in the width direction of the battery pack, the second electrical connector 52 is connected to the battery cell column in the first battery cell unit 21 located on an innermost side in the width direction of the battery pack, the third electrical connector 53 is connected to the battery cell column in the second battery cell unit 22 located on an innermost side in the width direction of the battery pack, and the fourth electrical connector 54 is connected to the battery cell column in the second battery cell unit 22 located on an outermost side in the width direction of the battery pack. When the first battery cell unit 21 and the second battery cell unit 22 are used in series, the third electrical connector 53 and the second electrical connector 52 are connected in series, thus this design facilitates the connection with the switch device 10 and the fuse 40. As shown in FIG. 9, the second electrical connector 52 is connected to the battery cell column in the first battery cell unit 21 located on the innermost side in the width direction of the battery pack, and the third electrical connector 53 is connected to the battery cell column in the second battery cell unit 22 located on the innermost side in the width direction of the battery pack. The positions of the third electrical connector 53 and the second electrical connector 52 are concentrated, and it convenient to arrange the positions of the switch device 10 and the fuse 40.

The battery cell column located on the outermost side here refers to two columns of battery cells that are farthest apart in the width direction of the battery pack in all the battery cell columns of the two battery cell units 20 (the first battery cell unit 21 and the second battery cell unit 22). The battery cell column located on the innermost side refers to two columns of battery cells that are closest to each other in the width direction of the battery pack in all the battery cell columns of the two battery cell units 20.

In the present invention, optionally, as shown in FIGS. 9 to 11, the plurality of battery cell columns in each battery cell unit 20 include at least two first battery cell columns 25, and each first battery cell column 25 includes a plurality of first battery cells 251 arranged along the length direction of the battery pack. In the length direction of the battery pack, the plurality of first battery cells 251 in one first battery cell column 25 are arranged in correspondence with the plurality of first battery cells 251 in another adjacent first battery cell column 25, to construct a plurality of battery cell pairs 252, and each battery cell pair 252 includes two first battery cells 251 located in different first battery cell columns 25. The battery pack further includes the first electrical connection bar 571 and the second electrical connection bar 572, the two first battery cells 251 in each of the battery cell pairs 252 are connected in series through the first electrical connection bar 571, and adjacent two battery cell pairs 252 are configured to be connected in series through the second electrical connection bar 572.

The battery cell unit 20 may be formed together by the plurality of battery cells connected in series, all battery cells in one battery cell unit 20 may be connected in series, and the battery cell unit 20 has the positive electrode and the negative electrode connected to the power distribution unit 30. One battery cell pair 252 includes two first battery cells 251 arranged along the width direction of the battery pack. The first electrical connection bar 571 is configured to connect the two first battery cells 251 in the battery cell pair 252 in series, so that the positive electrode and the negative electrode of the two first battery cells 251 arranged along the width direction of the battery pack after being connected in series are located at opposite ends in the length direction of the battery pack, and the positive and negative electrodes of adjacent battery cell columns after being connected in series are located at opposite ends in the length direction of the battery pack.

Because the battery cells 23 in a single battery cell column have a circuit path along the length direction of the battery pack after being connected in series, after two adjacent battery cell columns are connected in series, the circuit path includes a turn path (the circuit path at an end of two columns of battery cells), so that a positive electrode and a negative electrode of the circuit path here are at the same end after the two battery cell columns are connected in series, and so on, the circuit path of even columns of battery cells may make a positive electrode and a negative electrode of the total circuit path at the same end. Therefore, a positive electrode and a negative electrode of the total circuit path of odd columns of circuit paths are located at opposite ends in the length direction of the battery pack.

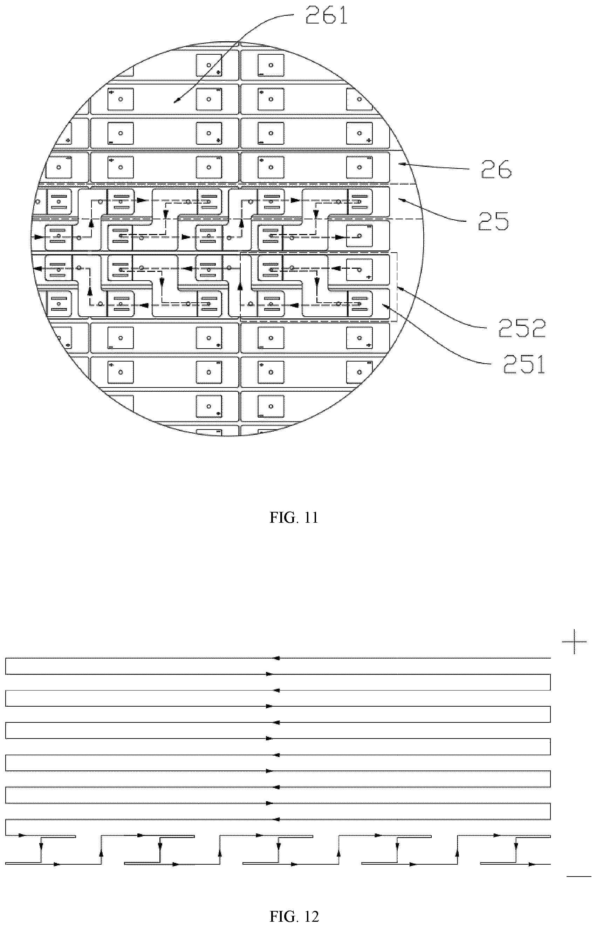

As shown in FIGS. 11 and 12, this design is equivalent to connecting the circuit paths in two columns of first battery cell 251 in series to form a circuit path without the turn path. Therefore, when this circuit path is connected in series with another odd column of circuit paths, the positive electrode and the negative electrode of the total circuit path may be located at the same end of the battery pack, facilitating the arrangement of the electrodes of the battery pack.

As may be seen from the above, in the battery pack provided in the present invention, adjacent first battery cells 251 in adjacent first battery cell columns 25 construct the battery cell pair 252, two first battery cells 251 in the battery cell pair 252 are connected in series, and adjacent battery cell pairs 252 are connected in series, so that a starting point and an ending point of a current direction of two columns of first battery cells 251 are located at opposite ends in the length direction of the battery pack (as shown in FIG. 11). When the number of battery cell columns of the battery cell unit 20 is an odd number, the above solution may make two first battery cell columns 25 equivalent to a composite battery cell column. The composite battery cell column is then matched with the remaining battery cell columns (a second battery cell column as shown in FIG. 9), and the battery cell unit that is equivalent to have even columns is obtained. In other words, the above solution may make the battery cell columns with the number of columns being an odd number in the battery cell unit be constructed to be similar to the battery cell columns with the number of columns being an even number. For even numbered battery cell columns, by connecting a plurality of even numbered battery cell columns in series, the positive electrode and the negative electrode of the battery cell unit 20 may be located at the same end of the battery pack, thus facilitating the arrangement of the electrodes of the battery pack, and facilitating the electrical connection between battery cell unit 20 and the power distribution unit.

In the present invention, in the length direction of the battery pack, the positive electrodes of two first battery cells 251 in each battery cell pair 252 are located on the same side, the positive electrode of one first battery cell 251 in each battery cell pair 252 is electrically connected to the negative electrode of the other first battery cell 251 through the first electrical connector 51, and the positive electrode of one of the adjacent two battery cell pairs 252 is electrically connected to the negative electrode of the other through the second electrical connection bar 572. As shown in FIG. 10, the positive electrodes of the two first battery cells 251 in the battery cell pair 252 are arranged on the same side, so that the positive and negative electrodes of the battery cell pair 252 may be located at opposite ends in the length direction of the battery pack after the positive and negative electrodes between the two first battery cells 251 in the battery cell pair 252 are connected in series.

In the present invention, as shown in FIG. 9, the plurality of battery cell columns in each battery cell unit 20 further includes at least one second battery cell column 26, which is arranged in the width direction of the battery pack with the first battery cell column 25, and the at least one second battery cell column 26 is connected in series with the first battery cell column 25. The second battery cell column 26 includes a plurality of second battery cells 261 arranged along the length direction of the battery pack, and the plurality of second battery cells 261 in the same second battery cell column 26 are connected in series. The second battery cell column 26 includes the plurality of second battery cells 261 arranged along the length direction of the battery pack. Since a positive electrode and a negative electrode of the second battery cell 261 are arranged along the length direction of the battery pack, the plurality of second battery cells 261 in the same second battery cell column 26 are connected in series. The second battery cell column 26 is connected in series with the first battery cell column 25 to form one battery cell unit 20.

In the present invention, as shown in FIG. 8, the battery pack further includes a plurality of third electrical connection bars 573, a plurality of fourth electrical connection bars 574, and a plurality of fifth electrical connection bars 575. Adjacent two second battery cells 261 in the same second battery cell column 26 are connected in series through the third electrical connection bar 573, adjacent two second battery cell columns 26 are connected in series through the fourth electrical connection bar 574, and the first battery cell column 25 and the second battery cell column 26 adjacent to the first battery cell column 25 are connected in series through the fifth electrical connection bar 575.

As shown in FIG. 10, the specific structure of the first electrical connection bar 571 is not limited. Optionally, the first electrical connection bar 571 includes a first section 5711, a second section 5712, and a third section 5713. The first section 5711 and the third section 5713 are respectively connected to opposite ends of the second section 5712. The first section 5711 and the third section 5713 extend in opposite directions in the length direction of the battery pack from the opposite ends of the second section 5712, respectively. The first section 5711 is connected to the positive electrode of one of the first battery cells 251 in the battery cell pair 252, and the third section 5713 is electrically connected to the negative electrode of the other first battery cell 251 in the battery cell pair 252. The two first battery cells 251 of the battery cell pair 252 are arranged along the width direction of the battery pack, the first electrical connection bar 571 is configured to connect the two first battery cells 251, the second section 5712 is configured to connect the two first battery cells 251 in the width direction of the battery pack, and the first section 5711 and the third section 5713 are connected to the opposite ends of the second section 5712 and extend in the opposite directions in the length direction of the battery pack, making it convenient to connect the positive electrode and the negative electrode of the two first battery cells 251. Since the positive electrodes of the two first battery cells 251 are located on the same side in the length direction of the battery pack, this design facilitates the connection of the first electrical connection bar 571 and the positive and negative electrodes of the two first battery cells 251. An extension direction of the second section 5712 may intersect with the length direction of the battery pack. In other words, the second section 5712 may be connected at an angle to the first section 5711, and the second section 5712 may be connected at an angle to the third section 5713. The present invention does not limit a connection angle between the second section 5712 and the first section 5711, and a connection angle between the second section 5712 and the third section 5713, which may be any appropriate angle.

For example, as shown in FIG. 10, the connection angle between the second section 5712 and the first section 5711 may be 90 °, that is, the first section 5711 may be perpendicular to the second section 5712, the connection angle between the second section 5712 and the third section 5713 may be 90 °, that is, the third section 5713 may be perpendicular to the second section 5712, and the first electrical connection bar 571 is constructed in a form similar to "Z" bar. Because the two first battery cells 251 in the battery cell pair 252 are arranged oppositely, the two first battery cells 251 are arranged in parallel. The first electrical connection bar 571 is set in the form similar to "Z" bar, and it is convenient for the first electrical connection bar 571 to connect the two first battery cells 251, and may make the battery cell pair 252 arranged neatly.

The specific structure of the second electrical connection bar 572 is not limited. Optionally, in an embodiment of the present invention, as shown in FIG. 10, the second electrical connection bar 572 includes a fourth section 5721, a fifth section 5722, and a sixth section 5723. The fourth section 5721 and the sixth section 5723 are respectively connected to opposite ends of the fifth section 5722. The fourth section 5721 and the sixth section 5723 extend in opposite directions in the length direction of the battery pack from the opposite ends of the fifth section 5722, respectively. The fourth section 5721 is connected to the positive electrode of one of adjacent two battery cell pairs 252, and the sixth section 5723 is connected to the negative electrode of the other one of the adj acent two battery cell pairs 252. The plurality of battery cell pairs 252 are arranged along the length direction of the battery pack. The second electrical connection bar 572 is configured to connect two battery cell pairs 252. The fifth section 5722 is configured to connect the two battery cell pairs 252 in the length direction of the battery pack. The fourth section 5721 and the sixth section 5723 are connected to the opposite ends of the fifth section 5722 and extend in the opposite directions in the length direction of the battery pack. This arrangement facilitates the second electrical connection bar 572 to connect the positive electrode and the negative electrode of the two battery cell pairs 252.

In the present invention, as shown in FIG. 10, an extension direction of the fifth section 5722 may intersect with the length direction of the battery pack. In other words, the fifth section 5722 may be connected at an angle to the fourth section 5721, and the fifth section 5722 may be connected at an angle to the sixth section 5723. The present invention does not limit a connection angle between the fifth section 5722 and the fourth section 5721, and a connection angle between the fifth section 5722 and the sixth section 5723, which may be any appropriate angle.

For example, as shown in FIG. 10, the connection angle between the fifth section 5722 and the fourth section 5721 may be 90 °, that is, the fourth section 5721 may be perpendicular to the fifth section 5722, the connection angle between the fifth section 5722 and the sixth section 5723 may be 90 °, that is, the sixth section 5723 may be perpendicular to the fifth section 5722, and the second electrical connection bar 572 is constructed in a form similar to "Z" bar. Because the arrangement of the battery cell pairs 252 along the length direction of the battery pack, the second electrical connection bar 572 is set in a form similar to "Z" bar, which facilitates the second electrical connection bar 572 to connect the positive and negative electrodes of the two battery cell pairs 252, and may make the first battery cell column 25 arranged neatly.

In the length direction of the battery pack, lengths of the first section 5711 and the third section 5713 of the first electrical connection bar 571 may be equal, lengths of the fourth section 5721 and the sixth section 5723 of the second electrical connection bar 572 may be the equal, and the length of the fourth section 5721 may be smaller than that of the first section 5711.

In the present invention, as shown in FIG. 8, in order to facilitate connecting adjacent two second battery cells 261, the third electrical connection bar 573 may be configured as a strip-shaped member extending along a first direction, and two ends of the third electrical connection bar 573 are electrically connected to the adjacent two second battery cells 261 in the same second battery cell column 26, respectively.

For the convenience of connecting the battery cell columns, the fourth electrical connection bar 574 and the fifth electrical connection bar 575 may be configured as a strip-shaped member extending along the width direction of the battery pack.

The fourth electrical connection bar 574 and the fifth electrical connection bar 575 may have the identical structure or different structures. When the fourth electrical connection bar 574 and the fifth electrical connection bar 575 are configured with the identical structure, it is convenient to unify processing. In the present invention, the number of battery cell units 20 is not limited, which is at least one. As shown in FIG. 8, the number of battery cell units may be two; and in each battery cell unit 20, the number of first battery cell columns 25 is two, and the number of second battery cell columns 26 is odd. Therefore, as analyzed above, the positive electrode and the negative electrode of the battery cell unit 20 may be located on the same side of the battery pack in the length direction.

As shown in FIGS. 8 and 9, the first battery cell columns 25 appear in pairs, and the first battery cells 251 of two columns of first battery cell columns 25 are connected in series, with the positive electrode and the negative electrode located at opposite ends in the length direction of the battery pack. A single second battery cell column 26 also has the positive electrode and the negative electrode located at opposite ends in the length direction of the battery pack. Therefore, when the second battery cell column 26 is connected to two first battery cell columns 25, the positive electrode and the negative electrode located at the same end may be obtained. When the number of the second battery cell columns 26 in the battery cell unit 20 is odd, a plurality of second battery cell columns 26 are connected in series, and then are connected in series with the two first battery cell columns 25 having the positive electrode and the negative electrode located at the opposite ends in the length direction of the battery pack, so that the positive electrode and the negative electrode of the battery cell unit 20 may be located at the same end of the battery pack.

For example, the number of battery cell units 20 is set to two, and when the number of columns containing a single column battery cell in the battery pack is a multiple of four, such as 20 or 24 columns, ends of each column of battery cells are connected in series, so that the electrodes of a plurality of single battery cell units 20 are all at the same end.

For example, the number of battery cell units 20 is set to two, and when the number of columns of a single column battery cell of a single battery cell unit 20 is not a multiple of two, and the number of columns containing a single column battery cell in a battery pack is not a multiple of four, such as 26 columns (the number of columns of a single column battery cell in a single battery cell unit 20 is 13), the ends of each column of battery cells are connected in series, so that it is impossible for the electrodes of the battery cell units 20 to be located at the same end of the battery pack. As shown in FIGS. 11 and 12, two columns of single column battery cell of first battery cell column 25 are cross-connected in series through the first electrical connector 51 and the second electrical connector 52, as indicated by current arrows in FIGS. 11 and 12, which is equivalent to forming a composite single column battery cell. Adopting this series connection solution, it is equivalent to changing 13 columns of battery cells of the single battery cell unit 20 into 11 columns of battery cells and 1 column of composite single column battery cell (namely 12 columns of battery cells), so that the total number of battery cell columns is a multiple of two, that is, 26 columns of battery cells of the two battery cell units 20 is changed into 22 columns of battery cells and 2 columns of composite single column battery cell (namely 24 columns of battery cells), so that the total number of battery cell columns is a multiple of four, ultimately ensuring that the electrodes all belong to the same end of the battery pack.

In the present invention, as shown in FIG. 8, the number of battery cell units 20 may be two. The two battery cell units 20 are arranged correspondingly, which may be used separately or in series, and may be configured to the use of different voltage platforms. One of the two battery cell units is chosen to be used alone, or the two battery cell units are connected in series and used at the same time, so that the battery pack may be suitable for charging platforms with different charging voltages, and may be discharged at different voltages at the same time.

It may be understood that in the present invention, the first battery cell 251 and the second battery cell 261 may have the identical structure.

According to a second aspect of the present invention, an electric apparatus is provided, including an apparatus body and a battery pack. The battery pack is installed on the apparatus body and configured to supply power to the apparatus body.

Here, the electric apparatus may include vehicles, mobile phones, portable devices, laptops, ships, spacecraft, electric toys, and power tools, and so on. The vehicles may be fuel vehicles, gas vehicles, or new energy vehicles. The new energy vehicles may be pure electric vehicles, hybrid vehicles, or extended range vehicles; the electric toys include fixed or mobile electric toys, such as game consoles, electric car toys, electric ship toys, and electric airplane toys, etc.; and the power tools include metal cutting power tools, grinding power tools, assembly power tools, and railway power tools, which are not limited in the present invention.

Optionally, when the electric apparatus is the vehicle, the battery pack of the present invention may be installed on a body of the vehicle to provide power for the driving of the vehicle.

FIG. 7 shows a circuit schematic diagram of the connection of the battery pack and the power distribution unit 30. Two battery cell units 20 are connected in series, the switch device 10 and the fuse 40 are connected in the series circuit to control the disconnection of the series circuit, another end of the two battery cell units 20 connected in series is connected to a circuit of the power distribution unit 30, and a precharging circuit is provided in the power distribution unit 30 for protecting a relay.

When a single battery cell unit 20 works, Fl (the fuse 40) and F2 (the switch device 10) are disconnected (or one of them is disconnected), ensuring that the series circuit between the battery cell units 20 is disconnected, and the first battery cell unit 21 or the second battery cell unit 22 is separately connected to the power distribution unit 30, which is suitable for a low voltage charging system. When the two battery cell units 20 work in series, Fl works normally and F2 closes, opposite ends of the series circuit of first battery cell unit 21 and the second battery cell unit 22 are connected to the power distribution unit 30, which is suitable for a high voltage charging system.

It may be understood that, FIG. 7 is a circuit schematic diagram provided in the present invention for the realization of the above functions, and the present invention does not limit other circuit diagrams that may realize the above functions or other arrangement ways of circuits.

The preferred embodiment of the present invention is described in detail above in conjunction with the drawings, however, the present invention is not limited to the specific details in the above embodiment, a variety of simple variants of the technical solution of the present invention may be made within the scope of the technical conception of the present invention, and these simple variants all fall within the protection scope of the present invention.

In addition, it should be noted that the specific technical features described in the specific embodiments, without contradiction, may be combined in any appropriate way, and in order to avoid unnecessary repetition, the various possible combinations are not separately stated in the present invention.

## Claims

1. A battery pack, comprising:
a battery pack case (70);
a switch device (10); and
a plurality of battery cell units (20) arranged in the battery pack case (70);
wherein a positive electrode of each of the battery cell units (20) is configured to be electrically connected with a positive terminal of a power distribution unit (30), and a negative electrode of each of the battery cell units (20) is configured to be electrically connected with a negative terminal of the power distribution unit (30);
the plurality of battery cell units (20) are sequentially arranged in a series circuit of the battery pack, and two ends of the series circuit are connected to the positive terminal and the negative terminal of the power distribution unit (30), respectively; and
the switch device (10) is arranged in the series circuit for connecting or disconnecting the series circuit, to connect the plurality of battery cell units (20) in series to the series circuit or disconnect a series connection between the plurality of battery cell units (20).

2. The battery pack according to claim 1, wherein the positive electrode and the negative electrode of the battery cell unit (20) in the plurality of battery cell units (20) are located on the same side of the battery pack.

3. The battery pack according to claim 2, wherein the plurality of battery cell units (20) are arranged along a width direction of the battery pack, and each of the battery cell units (20) comprises at least one battery cell group (24);
a battery cell (23) in each battery cell group (24) is extended and arranged along a length direction of the battery pack; and
the positive electrode and the negative electrode of each of the battery cell units (20) are located on the same side of the battery pack in the length direction;
wherein, preferably, each battery cell group (24) comprises a plurality of rows of battery cells (23) arranged along the length direction of the battery pack, each row of battery cells (23) comprises a plurality of battery cells (23) arranged along the width direction of the battery pack; and
in the same battery cell group (24), the battery cells (23) in each row of battery cells (23) are connected in series, and adjacent two rows of battery cells (23) are connected in series.

4. The battery pack according to claim 2, wherein each of the battery cell units (20) comprises a plurality of battery cell columns, each of the battery cell columns comprises a plurality of battery cells (23) arranged along a length direction of the battery pack, and the plurality of battery cell columns are arranged along a width direction of the battery pack; and
the plurality of battery cells (23) in each of the battery cell columns are connected in series, and adjacent two battery cell columns are connected in series.

5. The battery pack according to claim 1 or 2, wherein the plurality of battery cell units (20) comprise a first battery cell unit (21) and a second battery cell unit (22) arranged adjacent to each other; and
the switch device (10) is arranged in a circuit between a negative electrode of the first battery cell unit (21) and a positive electrode of the second battery cell unit (22).

6. The battery pack according to claim 5, wherein the first battery cell unit (21) and the second battery cell unit (22) are symmetrically arranged;
wherein, preferably, the first battery cell unit (21) and the second battery cell unit (22) are symmetrically arranged with respect to a centerline in the width direction of the battery pack.

7. The battery pack according to claim 5 or 6, further comprising a first electrical connector (51) and a second electrical connector (52);
wherein the first electrical connector (51) is configured to electrically connect the positive electrode of the first battery cell unit (21) to the positive terminal of the power distribution unit (30); and
the second electrical connector (52) is configured to electrically connect the negative electrode of the first battery cell unit (21) to the negative terminal of the power distribution unit (30).

8. The battery pack according to claim 7, further comprising a third electrical connector (53) and a fourth electrical connector (54);
wherein the third electrical connector (53) is configured to electrically connect the positive electrode of the second battery cell unit (22) to the positive terminal of the power distribution unit (30);
the fourth electrical connector (54) is configured to electrically connect the negative electrode of the second battery cell unit (22) to the negative terminal of the power distribution unit (30); and
a circuit between the second electrical connector (52) and the third electrical connector (53) is provided with the switch device (10).

9. The battery pack according to claim 8, wherein the circuit between the second electrical connector (52) and the third electrical connector (53) is further provided with a fuse (40) connected in series with the switch device (10).

10. The battery pack according to claim 9, wherein the first battery cell unit (21) and the second battery cell unit (22) are arranged along a width direction of the battery pack;
the first electrical connector (51), the second electrical connector (52), the third electrical connector (53), and the fourth electrical connector (54) are located on the same side of the battery pack in a length direction; and
in the width direction of the battery pack, the first electrical connector (51) and the fourth electrical connector (54) are two electrical connectors located on an outermost side; or
wherein, in the width direction of the battery pack, the first electrical connector (51) and the fourth electrical connector (54) are symmetrically arranged with respect to a centerline in the width direction of the battery pack; and/or, the second electrical connector (52) and the third electrical connector (53) are symmetrically arranged with respect to the centerline in the width direction of the battery pack; and/or
wherein the first electrical connector (51) comprises a first extension section (511), and the fourth electrical connector (54) comprises a second extension section (541);
the first extension section (511) and the second extension section (541) extend towards each other along the width direction of the battery pack; and
the first extension section (511) is configured to be electrically connected to the positive terminal of the power distribution unit (30), and the second extension section (541) is configured to be electrically connected to the negative terminal of the power distribution unit (30); and/or
wherein the second electrical connector (52) comprises a first connection section (521), and the third electrical connector (53) comprises a second connection section (531); and
the first connection section (521) and the second connection section (531) extend towards each other along the width direction of the battery pack, the first connection section (521) is connected to one of the switch device (10) and the fuse (40), and the second connection section (531) is connected to the other of the switch device (10) and the fuse (40).

11. The battery pack according to claim 10, wherein the first battery cell unit (21) comprises two battery cell groups (24) arranged along the width direction of the battery pack and connected in series, and the first electrical connector (51) is connected to a positive electrode of the battery cell group (24) in the first battery cell unit (21) located on an outer side in the width direction;
the second electrical connector (52) is connected to a negative electrode of the battery cell group (24) in the first battery cell unit (21) located on an inner side in the width direction;
the second battery cell unit (22) comprises two battery cell groups (24) arranged along the width direction of the battery pack and connected in series;
the third electrical connector (53) is connected to a positive electrode of the battery cell group (24) in the second battery cell unit (22) located on an inner side in the width direction; and
the fourth electrical connector (54) is connected to a negative electrode of the battery cell group (24) in the second battery cell unit (22) located on an outer side in the width direction;
wherein, preferably, the battery pack further comprises a plurality of jumpers (55) and a plurality of adapters (56);
four battery cell groups (24) comprise a plurality of rows of battery cells (23) arranged along the length direction of the battery pack, each row of battery cells (23) comprises a plurality of battery cells (23) arranged along the width direction of the battery pack; and
each of the battery cells (23) extends along the length direction of the battery pack, a positive electrode and a negative electrode of the battery cell (23) are arranged at two ends of the battery cell (23) along the length direction of the battery pack, adjacent battery cells (23) in the same row of battery cells (23) are connected in series through the jumper (55), and adjacent two rows of battery cells (23) are connected in series through the adapter (56);
wherein, preferably, the adapter (56) comprises an adapter straight bar (561) and an adapter bent bar (562);
the adapter straight bar (561) connects two battery cells (23) in adjacent two rows of battery cells (23) with narrow face opposite to each other in the width direction of the battery pack, and
the adapter bent bar (562) connects two battery cells (23) in adjacent two rows of battery cells (23) with the narrow face misaligned in the width direction of the battery pack.

12. The battery pack according to claim 10 or 11, wherein the second electrical connector (52) and the third electrical connector (53) are located in a middle of the battery pack in the width direction.

13. The battery pack according to claim 1 or 2, wherein a plurality of battery cell columns in each of the battery cell units (20) comprise at least two first battery cell columns (25), and each of the first battery cell columns (25) comprises a plurality of first battery cells (251) arranged along the length direction of the battery pack;
in the length direction of the battery pack, the plurality of first battery cells (251) in one first battery cell column (25) are arranged in correspondence with the plurality of first battery cells (251) in adjacent another first battery cell column (25), to construct a plurality of battery cell pairs (252), and each of the battery cell pairs (252) comprises two first battery cells (251) located in different first battery cell columns (25);
the battery pack further comprises a first electrical connection bar (571) and a second electrical connection bar (572); and
two first battery cells (251) in each of the battery cell pairs (252) are connected in series through the first electrical connection bar (571), and adjacent two battery cell pairs (252) are configured to be connected in series through the second electrical connection bar (572).

14. The battery pack according to claim 13, wherein in the length direction of the battery pack, positive electrodes of two first battery cells (251) in each of the battery cell pairs (252) are located on the same side; and
a positive electrode of one first battery cell (251) in each of the battery cell pairs (252) is electrically connected to a negative electrode of the other first battery cell (251) through the first electrical connection bar (571), and a positive electrode of one of the adjacent two battery cell pairs (252) is electrically connected to a negative electrode of the other through the second electrical connection bar (572); or
wherein the plurality of battery cell columns in each of the battery cell units (20) further comprise at least one second battery cell column (26);
the second battery cell column (26) and the first battery cell column (25) are arranged along the width direction of the battery pack, and the at least one second battery cell column (26) is connected in series with the first battery cell column (25);
the second battery cell column (26) comprises a plurality of second battery cells (261) arranged along the length direction of the battery pack; and
the plurality of second battery cells (261) in the same second battery cell column (26) are connected in series;
wherein, preferably, the battery pack further comprises a plurality of third electrical connection bars (573), a plurality of fourth electrical connection bars (574), and a plurality of fifth electrical connection bars (575);
adjacent two second battery cells (261) in the same second battery cell column (26) are connected in series through the third electrical connection bar (573);
adjacent two second battery cell columns (26) are connected in series through the fourth electrical connection bar (574); and
the first battery cell column (25) and the second battery cell column (26) adjacent to the first battery cell column (25) are connected in series through the fifth electrical connection bar (575).

15. An electric apparatus, comprising an apparatus body and a battery pack according to any one of claims 1-14, the battery pack being installed on the apparatus body and configured to supply power to the apparatus body.
